# EUROPÄISCHE PATENTSCHRIFT

(11) **EP 0 623 040 B1**
(45) Veröffentlichungstag und Bekanntmachung des Hinweises auf die Patenterteilung: **08.11.1995**
(21) Anmeldenummer: 93901690.3
(22) Anmeldetag: 18.01.1993
(51) Int. Cl.: A63F 9/22, H04N 5/74

(54) **UNTERHALTUNGS-ANLAGE**
ENTERTAINMENT INSTALLATION
DISPOSITIF DE DIVERTISSEMENT

(30) Priorität: 22.01.1992 DE 4201555
(43) Veröffentlichungstag der Anmeldung: 09.11.1994
(73) Patentinhaber: NSM AKTIENGESELLSCHAFT, 55411 Bingen (DE)
(72) Erfinder: SCHULZE, Ullrich, D-6200 Wiesbaden (DE); SCHATTAUER, Jürgen, D-6551 Hüffelsheim (DE); HEINEN, Horst, D-6534 Stromberg (DE); RIECK, Konrad, D-6530 Bingen (DE)
(74) Vertreter: Becker, Bernd, Dipl.-Ing.
(86) Internationale Anmeldenummer: DE9300045
(87) Internationale Veröffentlichungsnummer: WO9314843

(56) Entgegenhaltungen:
- EP-A- 0 292 465
- CH-A- 518 661
- FR-A- 2 579 050
- US-A- 4 357 015

## Beschreibung

Die Erfindung bezieht sich auf eine Unterhaltungsanlage mit mindestens einem ein Spielfeld aufweisenden Unterhaltungsgerät, bei der eine das Spielfeld erfassende Bildaufnahmeeinrichtung, ein mit der Bildaufnahmeeinrichtung verbundener Projektor und eine Projektionswand, auf die das aufgenommene Spielfeld-Bild projezierbar ist, vorgesehen ist.

Unterhaltungsgeräte sind in den verschiedensten Ausführungsformen bekannt. Sie sind als Spielgeräte mit oder ohne Geldgewinnmöglichkeit, als sogenannte Flipper, als Billard, als Wurfpfeil-Spielgeräte, als Video-Spielgeräte oder dergleichen ausgebildet. Es wurden bereits verschiedene Maßnahmen getroffen, um einen Benutzer oder Spieler zur Benutzung derartiger Unterhaltungsgeräte anzuregen und ihm während der Spieldauer zu einem angemessenen Unterhaltungserlebnis zu verhelfen.

Aus der US-A-4 357 015 ist ein Roulett-Spiel bekannt, bei dem oberhalb des Roulettkessels eine sich mit diesem mitdrehende Fernsehkamera vorgesehen ist, die entweder eine langsame Bewegung oder ein stehendes Bild des Roulettkessels zu einem Fernsehgerät sendet, um den Roulettkessel zu überwachen und den Spielern anzuzeigen. Hierbei können sämtliche Spieler sofort erkennen, in welches Fach des Roulettkessels die Roulettkugel eingefallen ist.

Der Erfindung liegt die Aufgabe zugrunde, bei einer Unterhaltungs-Anlage der eingangs genannten Art den Unterhaltungsablauf und die Gestaltungsmöglichkeiten abwechslungsreicher und mit größerem Spielanreiz auszugestalten, um so den Unterhaltungswert für der Benutzer zu erhöhen.

Diese Aufgabe wird erfindungsgemäß dadurch gelöst, daß der Projektionswand ein mit dem Unterhaltungsgerät verbundenes, die gleichen Betätigungsorgane wie das Unterhaltungsgerät aufweisendes Bedienpult zugeordnet ist.

Durch diese Maßnahme kann der Spieler, insbesondere dann, wenn es sich bei der Projektionswand um eine Groß-Projektionswand handelt, die Bedienung des Unterhaltungsgerätes von einem geeigneten Standort vor der Projektionswand aus durchführen und den Spielablauf des Unterhaltungsgerätes ohne unmittelbaren Kontakt mit dem Unterhaltungsgerät in seinen Einzelheiten genau verfolgen, was für den Spieler einen besonderen Unterhaltungswert darstellt. Darüber hinaus können nicht am Spiel beteiligte Spieler ohne Behinderung des Spielers das Spielgeschehen verfolgen und dem Spieler entsprechende Hinweise und Ratschläge geben, wie er den weiteren Spielverlauf gestalten soll. Ferner besteht die Möglichkeit, daß sich mehrere Personen zu einer Spiel-Gruppe zusammenschließen, die aufgrund der leichten Betrachtungsmöglichkeit des projezierten Spielfeldes und des diesem zugeordneten Bedienpultes das Unterhaltungsgerät gemeinsam bedient.

Nach einer vorteilhaften Weiterbildung des Erfindungsgegenstandes sind auf der Projektionswand einzelne Bereiche des Spielfeldes tasten- oder rechnergesteuert im Groß- oder Kleinformat darstellbar. Hieraus ergeben sich vielfältige Gestaltungsmöglichkeiten des Projektionsbildes, da besonders interessante Bereiche des realen Spielfeldes im Großformat und weniger interessante Bereiche des realen Spielfeldes im Kleinformat gleichzeitig oder zeitlich nacheinander auf die Projektionswand projeziert werden können.

Damit dem Spieler auch in Spielpausen oder "langweiligen" Spielphasen eine weitergehende Unterhaltung angeboten werden kann, ist bei einer weiteren vorteilhaften Ausgestaltung der erfindungsgemäßen Unterhaltungs-Anlage ein Video-, ein Fernseh-, ein Film- oder ein Dia-Gerät vorgesehen, durch das entsprechend auf der Projektionswand Videoclips, Fernsehprogramme, Filme oder Dias darstellbar sind.

Zwecks Erzielung eines ständigen Spielanreizes sind zweckmäßigerweise auf der Projektionswand gleichzeitig das Spielfeld und ein Videoclip, ein Fernsehprogramm, ein Film oder ein Dia darstellbar. Bevorzugt ist hierbei die gleichzeitige Projektion von Spielfeld und Videoclip oder dergleichen tasten- oder rechnergesteuert in unterschiedlichen Formaten durchführbar.

Bei einer weiteren vorteilhaften Ausgestaltung des Erfindungsgegenstandes sind auf die Projektionswand gleichzeitig mehrere unterschiedliche Spielfelder verschiedener Unterhaltungsgeräte projezierbar, wobei jedem Projektionsbild ein gesondertes Bedienpult zugeordnet ist. Dadurch wird insofern ein neues Unterhaltungserlebnis geschaffen, als der einzelne Spieler gleichzeitig die Spielfelder der anderen Spieler beobachten und sonach deren Spieltaktik beobachten kann.

Zur Realisierung einer einfachen Bildaufnahmeeinrichtung ist dieselbe zweckmäßigerweise als eine räumlich vor dem Spielfeld des Unterhaltungsgerätes angeordnete Kamera ausgebildet.

Um zum einen ein sauberes Projektionsbild zu erhalten und um zum anderen einen platzmäßig nicht störenden Standort des Projektors zu erreichen, ist nach einer vorteilhaften Weiterbildung der Erfindung der Projektor hinter der Projektionswans angeordnet.

Weiterhin ist bevorzugt vorgesehen, daß das Bedienpult als Fernbedienungseinheit ausgebildet ist. So ergibt sich eine besonders einfache Verbindung zwischen Bedienpult und Unterhaltungsgerät.

Der der Erfindung zugrundeliegende Gedanke wird in der nachfolgenden Beschreibung anhand dreier Ausführungsbeispiele, die in der Zeichnung dargestellt sind, näher erläutert. Es zeigt:
- Fig. 1: eine Ansicht auf eine Unterhaltungs-Anlage nach der Erfindung mit einem als Geldspielautomaten ausgebildeten Unterhaltungsgerät,
- Fig. 2: den prinzipiellen Aufbau einer erfindungsgemäßen Unterhaltungsanlage mit mehreren als Geldspielautomaten ausgebildeten Unterhaltungsgeräten und
- Fig. 3: eine Unterhaltungs-Anlage nach der Erfindung mit einem als Bildschirm-Spielgerät ausgebildeten Unterhaltungsgerät.

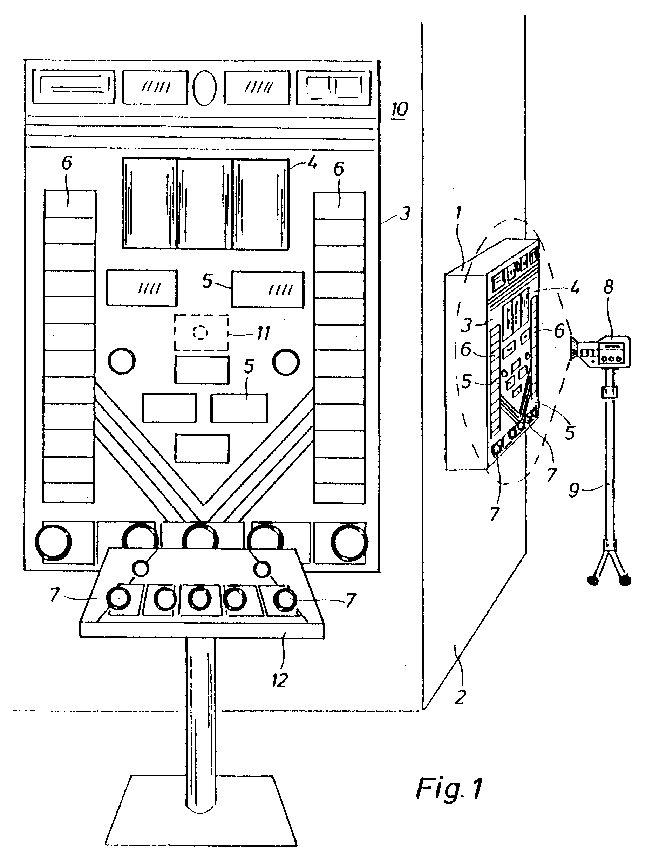

Bei der Unterhaltungs-Anlage nach Fig. 1 ist ein als Geldspielautomat ausgeführtes Unterhaltungsgerät 1 an einer Wand 2 aufgehängt. Das Unterhaltungsgerät 1 weist auf seiner als Spielfeld 3 ausgebildeten Vorderseite im wesentlichen eine Symbol-Spieleinrichtung 4, unterschiedlicher Anzeigen 5, zwei Risikospielleitern 6 und verschiedene Betätigungsorgane 7 auf. Räumlich vor dem Spielfeld 3 des Unterhaltungsgerätes 1 befindet sich eine Bildaufnahmeeinrichtung 8, die als eine auf einem Stativ 9 befestigte Kamera ausgebildet ist.

Hinter einer Projektionswand 10 ist ein mit der Bildaufnahmeeinrichtung 8 verbundener Projektor 11 angeordnet, über den das von der Bildaufnahmeeinrichtung 8 aufgenommene Spielfeld 3 des Unterhaltungsgerätes 1 auf die Projektionswand 10 projeziert wird. Vor der Projektionswand 10 steht ein Bedienpult 12, das ebenfalls mit den Betätigungsorganen 7 des Unterhaltungsgerätes 1 ausgerüstet ist. Über die Betätigungsorgane 7 des als Fernbedienungseinheit ausgebildeten Bedienpultes 12 kann sonach unter Beobachtung des auf der Projektionswand 10 dargestellten Spielfeldes 3 der Spielablauf des Unterhaltungsgerätes 1 beeinflußt werden. Damit wird dem Spieler ein sogenanntes "Geldspiel-Kino" geboten.

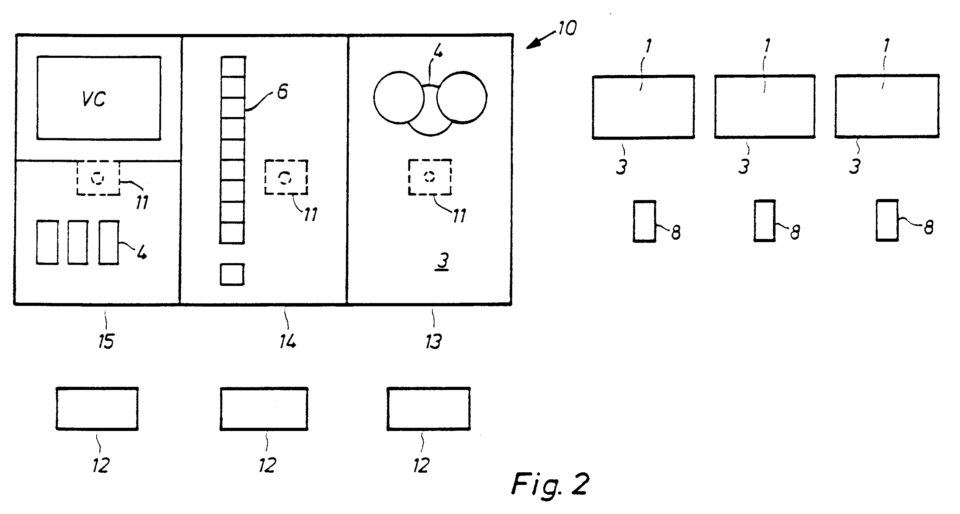

In Fig. 2 ist eine Unterhaltungs-Anlage mit drei als Geldspielautomaten ausgebildeten Unterhaltungsgeräten 1 veranschaulicht, vor deren Spielfeldern 3 jeweils eine Bildaufnahmeeinrichtung 8 angeordnet ist. Sämtliche Spielfelder 3 sind über mit den Bildaufnahmeeinrichtungen 8 gekoppelte Projektoren 11 auf die Projektionswand 10 projezierbar. Hierbei ist jedem entsprechenden Teilbereich 13, 14, 15 der Projektionswand 10 ein Bedienpult 12 zugeordnet. Im Teilbereich 13 ist das gesamte Spielfeld 3 und im Teilbereich 14 nur die Risikoleiter 6 in vergrößerter Ausführung wiedergegeben. In der unteren Hälfte des Teilbereiches 15 wird die Symbolspieleinrichtung 4 dargestellt, während in der oberen Hälte des Teilbereiches 15 durch Anordnung eines entsprechenden Gerätes ein Videoclip VC abläuft. Auf der Projektionswand 10 können einzelne Bereiche des Spielfeldes, sogenannte Spielfuturs nach Wahl des Spieler tastengesteuert oder vorgegeben rechnergesteuert im Groß- oder Kleinformat dargestellt werden. Darüber hinaus können auf der Projektionswand neben Videoclips auch Fernsehprogramme, Filme oder Dias angeboten werden. Durch die Variationsbreite der verschiedenen Darbietungen und der Wiedergabe derselben in unterschiedlichen Größen und Ausschnitten ergibt sich eine große Variationsbreite in der Unterhaltung.

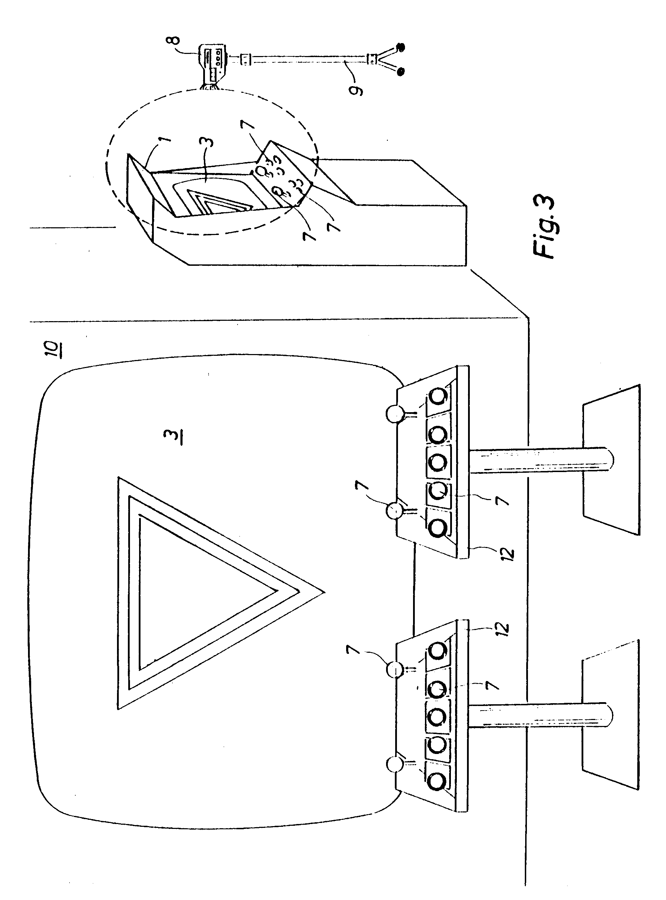

Bei der Unterhaltungs-Anlage nach Fig. 3 kommt ein Unterhaltungsgerät 1 zur Anwendung, das als Bildschirm-Spielgerät mit zwei Spielstellen ausgebildet ist. Demzufolge sind der Projektionswand 10 auch zwei Bedienpulte 12 zugeordnet, so daß unter Beobachtung des projezierten Spielfeldes 3 Wettkampfspiele durchgeführt werden können.

Die Erfindung ist nicht auf die darsgestellten und beschriebenen Ausführungsbeispiele beschränkt. Sie umfaßt auch alle fachmännischen Abwandlungen und Weiterbildungen sowie Teil- und/oder Unterkombinationen der beschriebenen und/oder dargestellten Merkmale und Maßnahmen.

## Patentansprüche

1. Unterhaltungs-Anlage mit mindestens einem ein Spielfeld aufweisenden Unterhaltungsgerät (1),bei der eine das Spielfeld (3) erfassende Bildaufnahmeeinrichtung (8), ein mit der Bildaufnahmeeinrichtung (8) verbundener Projektor (11) und eine Projektionswand (10) auf die das aufgenommene Spielfeld-Bild projezierbar ist, vorgesehen ist, dadurch gekennzeichnet, daß der Projektionswand (10) ein mit dem Unterhaltungsgerät (1) verbundenes, die gleichen Betätigungsorgane (7) wie das Unterhaltungsgerät (1) aufweisendes Bedienpult (12) zugeordnet ist.

2. Unterhaltungs-Anlage nach Anspruch 1, dadurch gekennzeichnet, daß auf der Projektionswand (10) einzelne Bereiche des Spielfeldes (3) tasten- oder rechnergeteuert im Groß- oder Kleinformat darstellbar sind.

3. Unterhaltungs-Anlage nach den Ansprüchen 1 oder 2, dadurch gekennzeichnet, daß ein Video-, ein Fernseh-, ein Film- oder ein Dia-Gerät vorgesehen ist, durch das entsprechend auf der Projektionswand (10) Videoclips, Fernsehprogramme, Filme oder Dias darstellbar sind.

4. Unterhaltungs-Anlage nach einem der Ansprüche 1 bis 3, dadurch gekennzeichnet, daß auf der Projektionswand (10) gleichzeitig das Spielfeld (3) und ein Videoclip, ein Fernsehprogramm, ein Film oder ein Dia darstellbar sind.

5. Unterhaltungs-Anlage nach einem der Ansprüche 1 bis 4, dadurch gekennzeichnet, daß die gleichzeitige Projektion von Spielfeld (3) und Videoclip oder dergleichen tasten- oder rechnergesteuert in unterschiedlichen Formaten durchführbar ist.

6. Unterhaltungs-Anlage nach einem der Ansprüche 1 bis 5, dadurch gekennzeichnet, daß auf die Projektionswand (10) gleichzeitig mehrere unterschiedliche Spielfelder (3) verschiedener Unterhaltungsgeräte (1) projezierbar sind, wobei jedem Projektionsbild ein gesondertes Bedienpult (12) zugeordnet ist.

7. Unterhaltungs-Anlage nach einem der Ansprüche 1 bis 6, dadurch gekennzeichnet, daß die Bildaufnahmeeinrichtung (8) eine räumlich vor dem Spielfeld (3) des Unterhaltungsgerätes (1) angeordnete Kamera ist.

8. Unterhaltungs-Anlage nach einem der Ansprüche 1 bis 7, dadurch gekennzeichnet, daß der Projektor (11) hinter der Projektionswand (10) angeordnet ist.

9. Unterhaltungs-Anlage nach einem der Ansprüche 1 bis 8, dadurch gekennzeichnet, daß das Bedienpult (12) als Fernbedienungseinheit ausgebildet ist.

## Claims

1. An entertainment installation comprising, at least one entertainment apparatus (1) having a playing area, an image recording device (8) which records the playing area (3), a projector (11) connected with the image recording device (8), and a projection wall (10) on which the recorded image of the playing area can be projected, CHARACTERIZED IN THAT associated with the projection wall (10) is a control desk (12) which is coupled with the entertainment apparatus (1) and which has actuating means (7) like actuating means of the entertainment apparatus (1).

2. An entertainment installation according to Claim 1 CHARACTERIZED IN THAT individual regions of the playing area (3) can be represented on the projection wall (10) by key control, or by computer control in large scale or small scale format.

3. An entertainment installation according to Claim 1 or 2 CHARACTERIZED IN THAT a video, a television, a film or a slide transparency apparatus is provided, by which, correspondingly, video clips, television programmes, films or transparencies can be displayed on the projection wall (10).

4. An entertainment installation according to any one of Claims 1-3 CHARACTERIZED IN THAT simultaneously the playing area (3), and a video clip, or a television programme, or a film or a transparency can be displayed on the projection wall (10).

5. An entertainment installation according to any one of claims 1-4 CHARACTERIZED IN THAT the simultaneous projection of playing area (3) and video clip or the like can be carried out under control by touch keys or by computer in different formats.

6. An entertainment installation according to any one of Claims 1-5 CHARACTERIZED IN THAT several different playing areas (3) of various entertainment apparatuses (1) can be simultaneously projected on the entertainment wall (10), and a separate service desk (12) is associated with each projected image.

7. An entertainment installation according to any one of Claims 1-6 CHARACTERIZED IN THAT the image recording device (8) is a camera located in front of and at a spacing from the playing area (3) of the entertainment apparatus.

8. An entertainment installation according to any one of Claims 1-7 CHARACTERIZED IN THAT the projector (11) is located behind the projection wall (10).

9. An entertainment installation according to any one of Claims 1-8, CHARACTERIZED IN THAT the service desk (12) is designed as a remote control unit.

## Revendications

1. Installation de divertissement avec au moins un appareil de divertissement (1) pourvu d'une aire de jeu, dans laquelle sont prévus un dispositif de prise de vues (8) braqué sur l'aire de jeu (3), un projecteur (11) relié au dispositif de prise de vues (8) et un écran de projection (10) sur lequel peut être projetée l'image prise de l'aire de jeu, caractérisée en ce qu'à l'écran de projection (10) est associé un pupitre de commande (12) relié à l'appareil de divertissement (1), comportant les mêmes organes d'actionnement (7) que l'appareil de divertissement (1).

2. Installation de divertissement selon la revendication 1, caractérisée en ce que, à l'aide de commandes par touches ou par ordinateur, certaines zones de l'aire de jeu (3) peuvent être représentées en grand ou en petit format sur l'écran de projection (10).

3. Installation de divertissement selon les revendications 1 ou 2, caractérisée en ce qu'il est prévu un appareil vidéo, un téléviseur, un projecteur de cinéma ou un projecteur de diapositives au moyen duquel peuvent être représentés sur l'écran de projection (10) respectivement des vidéoclips, des programmes de télévision, des films ou des diapositives.

4. Installation de divertissement selon l'une des revendications 1 à 3, caractérisée en ce que l'aire de jeu (3) et un vidéoclip, un programme de télévision, un film ou une diapositive peuvent être représentés simultanément sur l'écran de projection (10).

5. Installation de divertissement selon l'une des revendications 1 à 4, caractérisée en ce que la projection simultanée de l'aire de jeu (3) et d'un vidéoclip ou analogue peut s'effectuer dans différents formats à l'aide d'une commande par touches ou par ordinateur.

6. Installation de divertissement selon l'une des revendications 1 à 5, caractérisée en ce que plusieurs aires de jeu différentes (3) de divers appareils de divertissement (1) peuvent être projetées simultanément sur l'écran de projection (10), un pupitre de commande séparé (12) étant associé à chacune des images projetées.

7. Installation de divertissement selon l'une des revendications 1 à 6, caractérisée en ce que le dispositif de prise de vues (8) est une caméra disposée spatialement devant l'aire de jeu (3) de l'appareil de divertissement (1).

8. Installation de divertissement selon l'une des revendications 1 à 7, caractérisée en ce que le projecteur (11) est disposé derrière l'écran de projection (10).

9. Installation de divertissement selon l'une des revendications 1 à 8, caractérisée en ce que le pupitre de commande (12) est conçu sous la forme d une unité de télécommande.
